# FASCICULE DE BREVET EUROPEEN

(11) **EP 1 968 801 B1**
(45) Date de publication et mention de la délivrance du brevet: **09.10.2013**
(21) Numéro de dépôt: 06842014.0
(22) Date de dépôt: 21.11.2006
(51) Int. Cl.: B41K 3/00, B41M 5/26, B44D 5/10, B44B 5/00, C03B 18/00, C03C 19/00

(54) **PROCEDE DE MARQUAGE D'UNE FACE D'UN SUBSTRAT DE TYPE VERRIER, UN TEL SUBSTRAT ET MOYEN DE MARQUAGE POUR LE PROCEDE**
VERFAHREN ZUR MARKIERUNG EINER GLASARTIGEN SUBSTRATFLÄCHE UND MARKIERUNGSVORRICHTUNG DAFÜR
METHOD FOR MARKING A GLASS-TYPE SUBSTRATE SURFACE, SUBSTRATE AND MARKING DEVICE THEREFOR

(30) Priorité: 22.11.2005 FR 0553547
(43) Date de publication de la demande: 17.09.2008
(73) Titulaire: SAINT-GOBAIN GLASS FRANCE, 92400 Courbevoie (FR)
(72) Inventeur: GASCON, Hélène, F-75013 Paris (FR); SCHIAVONI, Michèle, F-75014 Paris (FR)
(74) Mandataire: Cardin, Elise
(86) Numéro de dépôt international: PCT/FR2006/051203
(87) Numéro de publication internationale: WO 2007/060363

(56) Documents cités:
- EP-A- 0 953 548
- WO-A-88/09990
- WO-A-89/05507
- BE-A- 676 768
- DE-A1- 3 808 380
- DE-C- 130 084
- JP-A- 4 006 117
- US-A- 2 326 044
- US-A1- 2004 007 021

## Description

La présente invention est relative à un procédé de marquage d'une face d'un substrat de type verrier, un tel substrat et un moyen de marquage pour le procédé.

Dans le domaine des vitrages décoratifs, il est usuel d'obtenir des verres avec un aspect mat et doux au toucher à la suite d'un traitement de surface par attaque acide. Néanmoins translucide, ces verres laissent passer la lumière tout en protégeant des regards les espaces intérieurs.

Pour obtenir un tel aspect, les verres sont soumis à des bains d'acide fluorhydrique ou des fluorures, en mélange avec d'autres produits. Ce traitement chimique nécessite des précautions particulières d'usage et ce procédé requiert une récupération des effluents d'attaque chimique. En outre, les formulations ont souvent une durée de vie réduite.

Enfin, ce procédé est long, génère des coûts de stockage des verres à traiter, et de nombreuses manipulations.

Par ailleurs, les verres laminés imprimés actuellement réalisés présentent une texture trop grossière pour égaler l'aspect mat des verres dépolis à l'acide.

La présente invention se propose de fournir une technique alternative au dépolissage à l'acide, moins polluante sans sacrifier les performances esthétiques et/ou fonctionnelles des verres - et plus largement de substrats de type verrier - et de préférence qui soit davantage compatible avec les exigences industrielles (en termes de cadence, d'automatisation...).

A cet effet, le préambule de la revendication décrit un procédé de marquage d'une face d'un substrat de type verrier, procédé comportant une étape de marquage mécanique de la face dudit substrat dans un état visqueux de viscosité donnée, ledit marquage étant réalisé par contact mécanique avec une surface en un matériau de marquage, le logarithme décimal de la viscosité du substrat, définie en poise, étant choisi supérieur à 4 et inférieur ou égal à 11, l'un au moins du substrat et de la surface de marquage étant mobile en translation, la vitesse relative entre la surface en matériau de marquage et la face du substrat étant non nulle, pour un marquage adapté. Un tel procédé est connu par WO-1-89/05507.

Par rapport au traitement par acide, le procédé de marquage selon l'invention est davantage respectueux de l'environnement et est aisément automatisable et/ou intégrable sur une ligne de production.

Le marquage mécanique selon l'invention s'effectue avec une viscosité du substrat adaptée pour marquer et garder au moins en partie, de préférence substantiellement, ledit marquage notamment sa forme, et/ou l'une et ses dimensions caractéristiques.

Par exemple, la viscosité peut être dans la région du point de ramollissement dit de Littleton, c'est-à-dire à 7,6.

Ainsi, le procédé se distingue nettement des conditions d'impression d'un verre par laminage où le verre est « liquide » - et donc à très haute température - et va fortement relaxer en température.

L'effet de chauffage de la peau par le coeur du substrat est d'ailleurs d'autant plus important que le substrat est choisi épais, rendant l'impression par laminage difficilement maîtrisable. A l'inverse, le procédé de marquage selon l'invention est peu sensible à l'épaisseur du verre, le marquage est réalisable sur des substrats de toutes épaisseurs, par exemple des verres de 1 cm d'épaisseur (pour tables...), de 4, 6 ou 8 mm (pour le bâtiment ...) ou moins, notamment en fonction des applications visées.

Le procédé de marquage selon l'invention permet d'avoir accès à une large palette visuelle, notamment une gamme étendue de flou.

Le procédé selon l'invention permet d'obtenir des marques ou irrégularités de surface inédites (par exemple des griffures, rayures, marbrures...).

L'invention concerne tout type de substrat pouvant être mise en oeuvre à l'état visqueux, notamment à transition vitreuse, et de préférence un substrat minéral.

Le substrat peut être transparent, par exemple, être un verre sodocalcique ou un borosilicate, ce verre pouvant en outre être clair, extraclair, teinté, éventuellement bullé. Le substrat peut être plan (feuille....) ou courbe.

Le marquage selon l'invention peut intervenir sur des substrats de grandes dimensions, notamment sur des largeurs de plusieurs mètres.

Le marquage selon l'invention est compatible avec toutes les transformations verrières suivantes: découpe, formage, façonnage, trempe, feuilletage double vitrage, réalisation d'un miroir....

Aucun autre traitement postérieur au marquage par contact selon l'invention n'est nécessaire pour obtenir des irrégularités recherchées, notamment des irrégularités fines.

Dans un mode de réalisation avantageux le logarithme décimal de la viscosité du substrat, définie en poise, est choisi entre 4, 5 et 8, et entre 5,5 et 6,5.

Les marques laissées par le procédé peuvent être en creux et/ou en relief, périodique, apériodique, aléatoire, et peuvent être définie par leur profil, notamment leur pente, et leur hauteur.

Dans cette gamme de viscosité, la pente et la hauteur obtenues à chaud sont particulièrement bien conservées à froid.

Le marquage convient particulièrement pour obtenir des irrégularités de surface fines, définies :
- par un paramètre de rugosité Ra inférieur ou égal à 10 µm, voire 5 µm, traduisant l'amplitude moyenne,
- et/ou un paramètre de rugosité Rdq supérieur ou égal à 2°, indiquant la pente moyenne et reflétant le niveau de diffusion, avec un filtre gaussien à 0,8 mm sur une longueur de mesure de quelques mm, par exemple 3 ou 5 mm, et un pas de 5 µm.

Ce marquage peut former une trame de fond. Ces irrégularités peuvent conférer au substrat un aspect flou et/ou mat.

L'aspect mat peut se définir notamment par une réflexion essentiellement diffuse par exemple supérieure à 80%, voire 90% de la réflexion totale.

Cette réflexion diffuse peut se définir comme une réflexion à l'extérieur d'un cône de petit angle typiquement de plus ou moins 2,5° avec un angle d'incidence de la lumière de 10°. Pour faire des mesures en réflexion, on peut utiliser un spectrophotomètre notamment un « PERKIN-ELMER LAMBDA-9 ».

Le marquage peut être réalisé sur un substrat lisse ou sur une partie lisse du substrat ou sur un substrat rugueux.

Par exemple, le substrat à marquer est déjà rugueux ou avec des motifs réguliers ou non, en creux ou en relief, géométrique ou non, par exemple de forme pyramidale, en créneau, allongé, par exemple obtenu par impression lors d'un laminage.

Ainsi, les zones en creux peuvent être transparentes ou translucides et les zones en reliefs marqués en surface pour un effet diffusant.

Le pas des motifs peut être notamment de quelques centaines de microns à quelques cm et au delà. La profondeur des motifs peut être notamment aller de quelques microns au millimètre, en particulier une ou plusieurs dizaines de microns.

Le marquage vient alors modifier ces motifs de manière contrôlée, en fonction de l'aspect final recherché. Par exemple, le marquage permet d'obtenir des irrégularités fines entre des irrégularités ou des motifs notamment en creux et espacés par exemple de 1 cm ou plus, ou encore le marquage vient araser des reliefs.

Le marquage selon l'invention peut éventuellement être orienté donc variable suivant l'orientation de l'observation.

Pour réaliser le marquage, l'homme du métier peut choisir par exemple différents matériaux de marquages et/ou rugosités de la surface en matériau de marquage.

La surface du matériau de marquage peut être de préférence:
- une surface martelée ou sablée, par des particules, billes ou agrégats métalliques (acier ...) et/ou céramiques, notamment abrasives, par exemple en silice, en corindon, zircone, ou des billes de verres,
- une surface abrasive,
- et/ou ou être une (multi)couche à base de céramique(s).

La surface peut en particulier être un tissu abrasif microstructuré par rotogravure ou estampage. Ce tissu se comporte comme des meules abrasives, avec des performances particulièrement stables car, lorsque la couche superficielle est usée, la deuxième couche apparaît, remplaçant la première.

Pour obtenir un aspect mat, le matériau de marquage est préférentiellement en céramique ou plus généralement en tout autre isolant thermique adapté, ayant naturellement une stabilité thermique suffisante.

Cette couche de céramique est de préférence avec des grains durs. Aussi, cette couche de céramique peut être choisie avec une dureté supérieure ou égale à 500 Hv de préférence supérieure ou égale à 900 Hv encore plus préférentiellement supérieure ou égale à 1100 Hv.

La surface du matériau de marquage peut être choisie rugueuse ou lisse, par exemple de Ra par exemple de l'ordre d'une dizaine de microns, notamment pour une surface céramique, ou de l'ordre du micron, notamment pour une surface métallique sablée. Pour une couche de céramique, la taille des grains de céramiques formant la couche conditionne directement la rugosité finale.

La céramique peut être de préférence à base de l'un ou les matériaux suivants :
- zirconate de magnésium, par exemple à 25% de MgO ;
- alumine zircone, par exemple à 75/25, de dureté de l'ordre de 1100 Hv ;
- carbure de chrome de dureté de l'ordre de 1100 Hv ;
- carbure de tungstène de dureté de l'ordre de 1800 Hv ;
- oxyde de chrome de dureté de l'ordre de 1500Hv.

La (multi)couche de céramique peut être obtenue par projection de particules en fusion sur un support (permanent ou provisoire) par exemple suivant une première technique de pulvérisation plasma à pression atmosphérique (« Atmospheric Plasma Spray » en anglais) ou une seconde technique dite de projection thermique Flamme-Cordon.

Selon le type de réglage, les particules projetées peuvent être des agglomérats de plusieurs grains de poudre frittés ou fusionnés ensemble, ce qui permet de projeter des particules plus grosses.

L'épaisseur de la couche de céramique peut être par exemple de 300 µm et au delà.

La face du substrat peut être plane ou sensiblement plane, par exemple le substrat est une plaque ou une feuille notamment de verre.

De manière avantageuse, le procédé peut comprendre une étape de formation d'une feuille formant ledit substrat verrier, suivi, en continu, dudit marquage.

Lors de la formation de la feuille, par exemple en verre, on a directement accès la viscosité conforme à l'invention. Par rapport à un procédé en reprise, cela évite de devoir réchauffer le substrat pour le placer dans l'état visqueux conforme à l'invention, permet un gain de temps, donc une rentabilité améliotée.

En particulier, le marquage peut être réalisé avant un passage dans une étenderie ou un four de recuisson.

La formation d'une feuille correspondant audit substrat verrier peut être réalisée par laminage suivi, de préférence en continu, dudit marquage - l'un ou les rouleaux lamineurs typiquement en acier pouvant être lisses, rugueux, ou à motifs pour imprimer la feuille - .

De préférence, en cas du laminage préalable, le marquage peut être réalisé après la remontée en température de la surface de la feuille.

La formation d'une feuille correspondant audit substrat verrier peut être réalisée par étirage vertical ou horizontal suivi, de préférence en continu, dudit marquage.

Selon un mode préféré de mise en oeuvre du procédé de marquage selon l'invention, on opère à partir d'un plateau ou d'un substrat verrier obtenu à partir d'un procédé d'élaboration du type Fourcault, ce procédé est décrit notamment dans le brevet US 717,378 et consiste à obtenir une feuille de verre à partir d'une plaque solide ou un peigne plongé(e) dans un liquide visqueux et qu'on retire lentement. Cette plaque entraîne avec elle une certaine quantité de liquide épais, visqueux qui monte ainsi au-dessus de la surface du bain, jusqu'au moment où une rupture se produit dans la partie qui émerge.

Le marquage est réalisé préférentiellement avec un moyen de marquage à surface externe courbe en ledit matériau de marquage.

Dans un mode préféré de réalisation, ledit substrat défile à une vitesse donnée de préférence en translation, et le marquage est réalisé avec un moyen de marquage, de préférence rotatif, de vitesse linéaire ou tangentielle supérieure à la vitesse du substrat, de préférence 10 fois supérieure, voire 100 fois supérieure et au-delà.

Le substrat peut être plan, mobile en translation, et le moyen de marquage courbe et fixe ou rotatif, suivant un axe fixe avec une certaine vitesse tangentielle.

Le substrat peut être courbe, fixe ou rotatif suivant un axe fixe et le moyen de marquage plan et mobile en translation avec une certaine vitesse linéaire.

Le substrat et le moyen de marquage peuvent être plans. Le substrat peut être mobile en translation et le moyen de marquage peut être fixe ou avec un mouvement linéaire de va et vient.

Par exemple, la vitesse tangentielle du moyen de marquage est entre 30 m/min et 900 m/min pour un défilement du substrat de quelques mètres/min.

Les vitesses sont de même sens ou de sens inverse. La vitesse peut être variable, commandable, rétrocontrôlée.

Lorsque le substrat est plan avec une largeur donnée, l'axe du moyen rotatif est par exemple sensiblement parallèle à la largeur du substrat défilant dans le sens de sa longueur.

Le marquage peut être réalisé par exemple :
- avec un moyen de marquage rotatif suivant un axe sensiblement parallèle à la face choisie plane et qui comprend un membre cylindrique, de préférence un rouleau,
- avec un moyen de marquage rotatif suivant un axe sensiblement parallèle à la face choisie plane et positionné au-dessus dudit substrat plan, mobile en translation et disposé sur un convoyeur qui est de préférence un système à rouleaux.

Le moyen de marquage rotatif est par exemple face à l'un des rouleaux convoyeurs pour pouvoir appuyer sur le substrat.

Le marquage peut correspondre à un griffage de la surface et peut conduire à une anisotropie du marquage pouvant entraîner une différence de flou suivant l'orientation de l'observateur par rapport au sens de défilement du substrat verrier. Le flou est par exemple plus important dans la position parallèle à ce défilement.

Pour brouiller les griffes, ce moyen de marquage rotatif peut présenter un mouvement additionnel de va-et-vient, notamment des mouvements latéraux, c'est-à-dire perpendiculaires à l'axe de défilement du substrat et de préférence de faible amplitude, c'est-à-dire d'amplitude maximale inférieure ou égale à 1 cm de préférence inférieure ou égale 1 mm encore plus préférentiellement inférieure ou égale 500 µm.

Le marquage peut être réalisé avec un moyen de marquage rotatif choisi parmi :
- un corps cylindrique creux éventuellement refroidi par un vecteur (air, gaz .., liquide adapté) disposé dans le corps creux,
- ou un corps plein, le corps étant de préférence en matériau de marquage céramique comprenant éventuellement une partie métallique sous-jacente.

Le procédé peut comprendre des marquages successifs par une pluralité de moyens, notamment rotatifs, en des matériaux de marquage identiques ou similaires et avec des axes d'orientations distinctes ou non.

La présente invention propose aussi un moyen de marquage pour la mise en oeuvre du procédé tel que défini précédemment, ce moyen ayant une surface courbe en un matériau de marquage à base de céramique(s).

Le moyen de marquage peut être un corps (cylindrique) creux ou un corps cylindrique creux éventuellement refroidi par un vecteur disposé dans le corps creux.

Le moyen de marquage peut être monolithique, en ledit matériau de marquage ou bien comprendre une partie métallique, de préférence en acier sous-jacente.

Le moyen de marquage peut comprendre une couche intermédiaire, entre le coeur métallique et la couche de céramique. Cette couche peut servir pour assurer une bonne adhérence et pour amortir les coefficients de dilatation.

La surface du moyen de marquage peut être une (multi) couche à base de céramique(s), telles que déjà décrites, par exemple comporter un tissu abrasif microstructuré.

La présente invention concerne enfin un substrat verrier dont une face présente des marques ou irrégularités (géométriques, en relief, en creux, superposées à des motifs...), notamment pour conférer un aspect flou et/ou mat,
- les irrégularités étant obtenues par le procédé tel que défini précédemment,
   et/ou
- les irrégularités étant allongés, de type griffes ou rayures, notamment arrondies, et suivant au moins une direction.

Ce substrat verrier est de préférence essentiellement minéral, peut être monolithique feuilleté ou multiple, peut être transparent et plan.

A l'oeil, un substrat marqué peut être blanc et mat qui peut produire un effet flou. Cet effet flou peut être mis en évidence et quantifiée au Hazemeter qui caractérise la fraction de lumière transmise par diffusion en dehors du spéculaire (Flou = Transmission Diffuse TD / Transmission lumineuse TL).

De préférence, le substrat présente un flou supérieur ou égal à 50 %, encore plus préférentiellement supérieur ou égal à 60 %.

Le flou peut être anisotrope et orienté par les griffes, ou isotrope.

Cette première surface peut présenter une certaine rugosité, définie à partir des paramètres de rugosité bien connus :
- un Ra inférieur à 5 µm, de préférence inférieur ou égal 2 µm voire 1 µm, notamment entre de l'ordre de 0,8 µm ou 0,4 µm ;
- un Rdq supérieur à 2, de préférence supérieur ou égal à 3 ;
- et éventuellement un RSm inférieur ou égal à 300 µm, de préférence 200 µm, notamment de l'ordre de 60 µm et de l'ordre de 100 µm, le RSm indiquant la période moyenne.
pour un filtre gaussien de 0,8 mm et une longueur de mesure de quelques mm avec un pas de 5 µm.

Par rapport aux verres dépolis à l'acide, des verres marqués selon l'invention peuvent présenter des marques moins profondes en moyenne mais plus régulières, une période comparable, et une pente moins élevée.

Les griffes ou rayures peuvent être plus ou moins régulières, les pics peuvent être en majorité arrondis. Entre les rayures, la surface peut être d'aspect grumeleux. Les griffes ou rayures peuvent être nettes, par exemple sans écaille, et longitudinales.

La face marquée peut présenter des reliefs et/ou des creux, de préférence géométriques, de pas supérieur ou égal à quelques centaines de microns et de profondeur comprise entre quelques microns à 1 millimètre.

Les substrats marqués selon l'invention peuvent présenter un toucher sec différent du toucher gras des verres dépolis à l'acide.

La face marquée du substrat selon l'invention peut être moins salissante et/ou plus facile à nettoyer qu'un verre dépoli à l'acide.

Les verres marqués sont moins sensibles aux traces de doigt que les verres dépolis à l'acide.

Les traces de doigt s'enlèvent au chiffon sec. L'aptitude à un nettoyage plus aisé est importante notamment dans le domaine décoratif car la surface extérieure est souvent exposée directement aux agressions extérieures et les personnes ont envie de la toucher.

Par ailleurs, la face opposée à la face marquée selon l'invention peut être lisse.

Le substrat verrier marqué selon l'invention peut être utilisé en particulier en tant qu'élément de façade, comme aménagement d'intérieur, cloison, mobilier, pour des meubles de vente, comme présentoir, porte, vitrine, comme élément de décoration dans des cuisines, salles de bains, comme fenêtre ou encore comme diffuseur.

Ce substrat verrier marqué selon l'invention peut faire partie par exemple d'un vitrage ou d'une portion de vitrage intérieur ou extérieur.

Le substrat verrier marqué selon l'invention peut valoriser tout type d'espace (privés, commerciaux, bureaux, hôtels) en mobilier, cabine de douche, porte et vitrage de baie.

Par ailleurs, un système de rétro-éclairage qui consiste en une source de lumière ou « back-light » est par exemple utilisé comme source de rétro-éclairage pour des écrans à cristaux liquides, dénommés encore écrans LCD. Il apparaît que la lumière ainsi émise par le système de rétro-éclairage n'est pas suffisamment homogène et présente des contrastes trop importants. Ainsi, un diffuseur rigide associé au système de rétro-éclairage est donc nécessaire pour homogénéiser la lumière.

La structure optique comporte au dessus du diffuseur rigide un élément de type « BEF », par exemple un film plastique, lequel comporte une face inférieure lisse et une face supérieure avec des sillons ayant un angle au sommet de 90° pour rediriger la lumière vers l'avant,

Aussi, le substrat verrier marqué avec un lignage selon l'invention peut être utilisé comme élément de redirection de la lumière vers l'avant notamment pour un système de rétroéclairage d'un écran type à cristaux liquides.

D'autres détails et caractéristiques de l'invention apparaîtront de la description détaillée qui va suivre, faite en regard des dessins annexés sur lesquels :
- les figures 1 et 2 représentent des vues schématiques de côté du procédé de marquage selon l'invention dans des premier et deuxième modes de réalisation de l'invention ;
- les figures 3 et 4 des vues schématiques en coupe de moyens de marquage selon l'invention ;

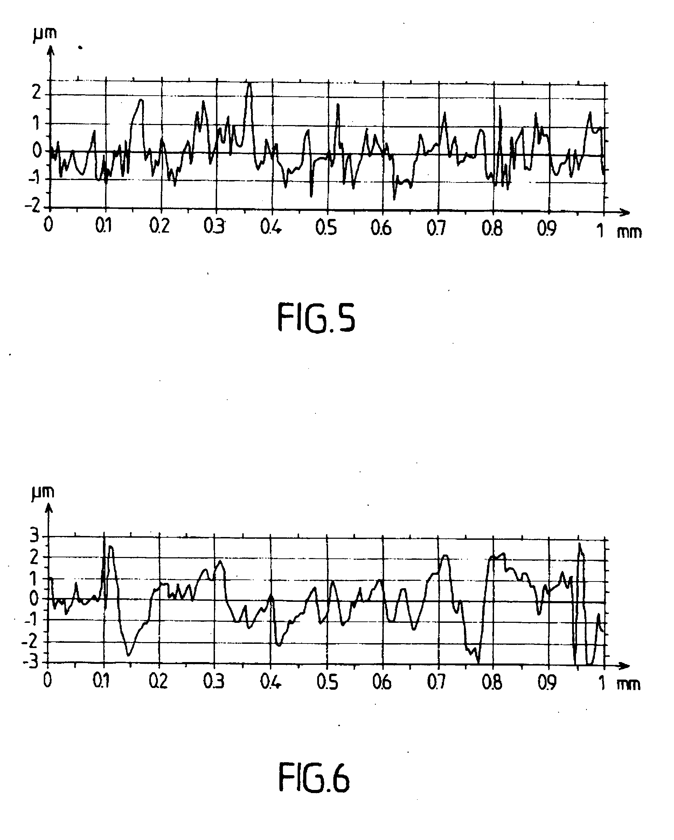

- les figures 5 et 6 sont des profils de rugosités de produits marqués selon l'invention ;
- la figure 7 est une vue schématique d'un produit marqué selon l'invention ;

On précise que pour un souci de clarté les différents éléments des objets représentés ne sont pas nécessairement reproduits à l'échelle.

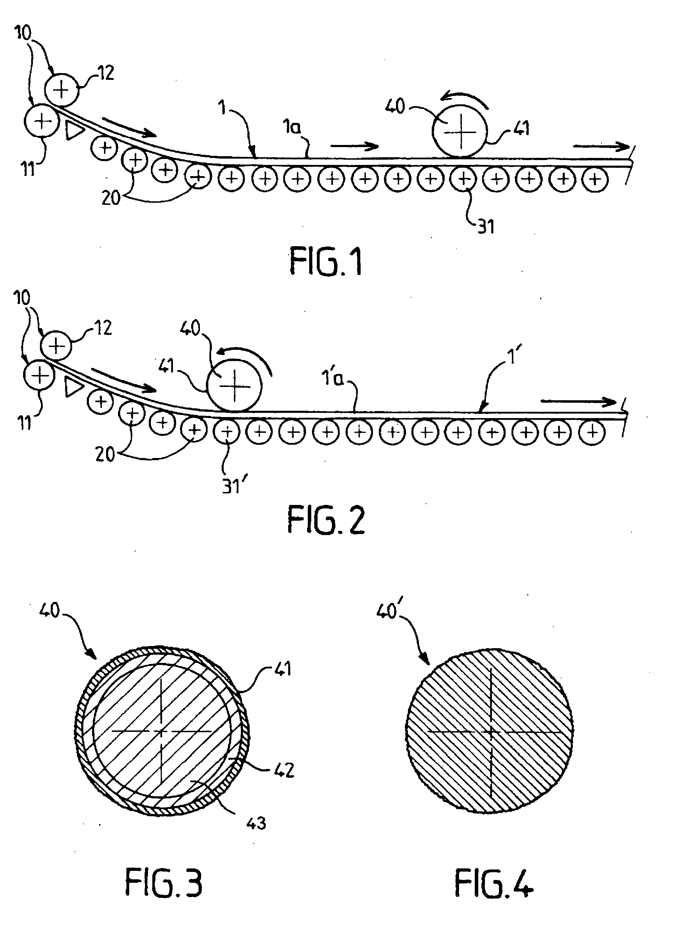

La figure 1 représente le procédé de fabrication d'une feuille de verre marquée selon un premier mode de réalisation de l'invention.

Des rouleaux lamineurs 10, en acier, assurent la formation d'une feuille de verre 1, le rouleau inférieur 11 étant par exemple lisse et le rouleau supérieur 12 étant lisse ou, en variante étant apte à former sur la feuille 1 des motifs géométriques en creux et/ou en relief, par exemple des pyramides ou des motifs allongés, espacés de quelques cm et de profondeur de 10 µm à 2 mm.

Des rouleaux convoyeurs 20, 30 entraînent la feuille de verre 1 à une vitesse de 3 m/min dans le sens de sa longueur.

Au niveau du rouleau convoyeur 31 est disposé un rouleau de marquage 40 situé au-dessus de la feuille 1 et venant en contact par exemple sur toute la largeur de la face supérieure la de la feuille 1

Le rouleau de marquage 40 est en rotation dans le sens opposé des aiguilles d'une montre, ou en variante tournent dans le sens des aiguilles d'une montre.

L'axe de rotation du rouleau 40 est par exemple parallèle à la largeur de la feuille de verre 1.

La vitesse tangentielle du rouleau de marquage 40 est supérieure à la vitesse de la feuille.

Le rouleau de marquage 40 n'est pas refroidi.

A l'endroit du rouleau convoyeur 31, le logarithme décimal de la viscosité définie en poise est de l'ordre de 7,5.

Le procédé est en continu et le verre marqué 1 passe ensuite dans une étenderie (non représentée) et peut subir d'autres transformations verrières ultérieurement (découpe, trempe...).

Comme montré en figure 3, le rouleau de marquage 40 est composé d'un corps en acier 43, recouvert de préférence d'une couche intermédiaire 42, pour l'adhérence et la dilatation thermique et d'une couche externe 41, d'alumine zircone à 75/25. Cette couche de céramique 41 est déposée par pulvérisation sous plasma atmosphérique, présente une dureté de 1100 Hv, et une stabilité jusqu'à 900°C. Cette céramique 41 présente en outre une rugosité définie par un Ra de l'ordre d'une dizaine de microns.

En première variante non représentée, la couche externe du rouleau est en zirconate de magnésium à 25% de MgO. Cette couche est déposée par projection thermique flamme cordon, avec une dureté de l'ordre de 1000 Hv, et une stabilité jusqu'à 1300°C. Cette céramique présente en outre une rugosité définie par un Ra de l'ordre d'une dizaine de microns.

En deuxième variante, on utilise un rouleau plein monolithique en céramique comme montré en figure 4.

En troisième variante, on utilise un rouleau creux, éventuellement refroidi.

La figure 2 représente le procédé de fabrication d'une feuille de verre marquée selon un deuxième mode de réalisation de l'invention.

Ce deuxième mode diffère du premier mode de réalisation en ce que le rouleau de marquage 40' est positionné plus en amont, au niveau d'un rouleau convoyeur 31'.

A cette position, le logarithme décimal de la viscosité définie en poise est de l'ordre de 6. Le contact avec le rouleau rigide est particulièrement bon.

Alternativement :
- le moyen de marquage 40 présente un mouvement additionnel de va-et-vient de préférence de faible amplitude,
- et/ou le moyen de marquage est en acier sablé, ou encore la couche de céramique est remplacée par un tissu abrasif microstructuré.

### EXEMPLES

Une première série de verres a été réalisée en mettant en oeuvre le procédé suivant la première configuration décrite précédemment en relation avec les figures 1 et 3.

La feuille de verre n°1a est en verre silico sodocalcique d'épaisseur 5 mm, de largeur égale à 30 cm, avec le rouleau 40 à une vitesse 300 fois supérieure à celle de la feuille et tournant dans le sens inverse des aiguilles d'une montre soit dans le sens du défilement du verre.

La feuille de verre n°1b est en verre silico sodocalcique d'épaisseur 5 mm, de largeur égale à 30 cm avec le rouleau 40 à une vitesse 300 fois supérieure à celle de la feuille et tournant dans le sens des aiguilles d'une montre soit dans le sens inverse du défilement du verre.

Une deuxième série de verres a été réalisée en mettant en oeuvre le procédé suivant la première configuration décrite précédemment mais avec le rouleau de la première variante

La feuille de verre n°2 est en verre silico sodocalcique d'épaisseur 5 mm, de largeur égale à 30 cm avec les rouleaux de la première variante à une vitesse 200 fois supérieure à celle de la feuille et tournant dans le sens inverse des aiguilles d'une montre soit dans le sens du défilement du verre.

D'autres types de verre, de tailles de verre, et d'épaisseur de verre peuvent être choisis.

### Aspect de surface

Les verres n°1a, n°1b et n°2 ont des marques sous forme de griffures.

Les figures 4 représentent respectivement les profil de rugosité des verres n°1a et n°2 avec un filtre de 0,8mm un pas de 5µm et une longueur de mesure de 5mm.

Pour faciliter la visualisation de pics, seulement les profils sont présentés sur 1 mm.

Pour les verres marqués avec le cylindre 40, verre n°1a comme n°1b, on distingue des rayures de profondeur d'environ 0,5 µm plus ou moins régulières, et des pics entre +/-2,5 µm. Ces pics peuvent correspondre à l'aspect « grumeleux » de la surface entre les rayures observable par microscope optique à grossissement 20. Perpendiculairement à ces rayures, on ne distingue pas de marques régulières au microscope optique à ce grossissement.

Le profil de rugosité montre qu'il y a eu un marquage bien visible de la surface du verre la et sous forme de griffes orientées dans le sens de défilement du verre. Un profil similaire est obtenu pour le verre 1b.

Pour le verre n°2, les griffes présentent des variations plus larges (périodes plus grandes). Elles sont plus arrondies. Les plus grandes vont jusqu'à +/-3µm et les plus petites entre +/-µm. Le profil semble plus proche de ceux des verres dépolis à l'acide. Le flou obtenu est moins grand.

Sont présentées en tableau 1 les valeurs de paramètres de rugosité standards (Ra, Rdq, RSm), calculées pour les verres n°1a, n°1b et n°2 ainsi que deux verres dépolis à l'acide usuels à titre de comparaison. Le filtre choisi est le filtre gaussien classique à 0,8 mm, le longueur de mesure est de 5 mm avec un pas de 5 µm.

**Tableau 1**

| | Ra (µm) | | RSm (µm) | | Rdq (°) | |
|---|---|---|---|---|---|---|
| | Moyenne | Écart type | Moyenne | Écart type | Moyenne | Écart type |
| Verre 1a | 0,5 | 0,03 | 59,2 | 4,75 | 5,1 | 0,59 |
| Verre 1b | 0,4 | 0,04 | 57,2 | 5,79 | 4,1 | 0,71 |
| Verre 2 | 0,8 | 0,07 | 101,1 | 12,06 | 6,5 | 1,98 |
| Verre 3 (comparatif) | 1,7 | 0,05 | 98,1 | 4,68 | 12,2 | 0,2 |
| Verre 4 (comparatif) | 2,3 | 0,02 | 62,6 | 1,6 | 23,6 | 0,32 |

Les profils sont assez réguliers : les écarts types des paramètres de rugosité sont de l'ordre de 1/10ème.

On ne note pas de différence de marquage notable entre les verres n°1a et n°1b qui ont été marqués avec le même rouleau 40 mais en rotation dans deux sens opposés. Le sens de rotation du rouleau ne semble pas avoir d'impact sur l'aspect final, vu sa vitesse élevée de rotation par rapport au défilement du verre.

On constate que le verre 2 présente une surface différente des verres la et 1b. La profondeur moyenne, le pas moyen et la pente moyenne sont plus élevés. L'effet de flou est moins fort.

Par rapport aux verres dépolis à l'acide, n°3 et n°4, les verres marqués à chaud n°1a, n° 1b et n°2 présentent des motifs moins profonds en moyenne. Le pas est comparable (RSm) et plus irrégulier. La pente (Rdq) est moins forte donc les verres sont globalement moins diffusants.

### Aspect mat

Les verres marqués n°1a, n°1b et n°2 présentent un aspect que l'on peut qualifier de mat. Lorsqu'on les observe en réflexion, on n'observe pas de reflet important. La réflexion sur ces verres est faible et principalement diffuse. Cet aspect mat est proche de celui des produits satinés à l'acide, surtout pour les verres n°1a et n°1b. Notamment par cet aspect mat, les verres marqués 1a, 1b et 2 sont très différents des verres imprimés usuels qui sont brillants et pour lesquels on observe un important reflet en réflexion.

Par ailleurs, les verres marqués n°1a, n°1b, n°2 ont un toucher « sec », différent des verres dépolis à l'acide n°3, n°4. Ils ont également un toucher doux car les griffes sont arrondies.

A l'oeil nu, les verres marqués n°1a, n°1b, n°2 regardés en réflexion sont moins salis par des traces de doigts que les verres dépolis à l'acide n°3 et n°4.

Les traces de doigt s'enlèvent au chiffon sec sur les verres marqués 1a, 1b, 2 sans difficultés.

### Caractérisation du flou

### Anisotropie du flou.

La surface des verres n°1a, n°1b et n° 2 présentent des griffures parallèles au sens de défilement du verre, i. e. perpendiculairement à l'axe du cylindre.

Si on regarde l'effet de brouillage d'une image - une mire formée de traits parallèles noirs sur un fond blanc, régulièrement espacés, par exemple 1 trait/mm ou 2 traits/mm ou 3 traits/mm - par les verres marqués, on observe un effet différent suivant l'orientation du verre.

Lorsque la mire est parallèle aux griffures (donc dans le sens de défilement du verre), le brouillage de la mire est important, on ne distingue plus les traits.

Lorsque la mire est perpendiculaire aux griffures (donc perpendiculaire au sens de défilement du verre), le brouillage de la mire est plus faible, on distingue encore les traits.

On obtient donc un effet flou anisotrope : les traits parallèles aux griffes marquées à la surface sont beaucoup plus brouillés que les traits perpendiculaires à ces griffes.

### Mesure du flou

Le flou, mesuré classiquement au Hazemeter nommé Hezegard system XL-211 de la société BYK GARDNER, est répertorié dans le tableau 2.

**Tableau 2**

| | TL | TD | Flou |
|---|---|---|---|
| Verre 1a | 84 | 52 | 61 |
| Verre 2 | 79 | 47 | 60 |

On obtient un flou plus important pour le verre n°1a que pour le verre n°2, le cylindre dans la variante marquant moins fortement le verre.

Ces mesures mettent en avant l'effet du marquage. Elles montrent clairement un effet de flou dans la zone marquée.

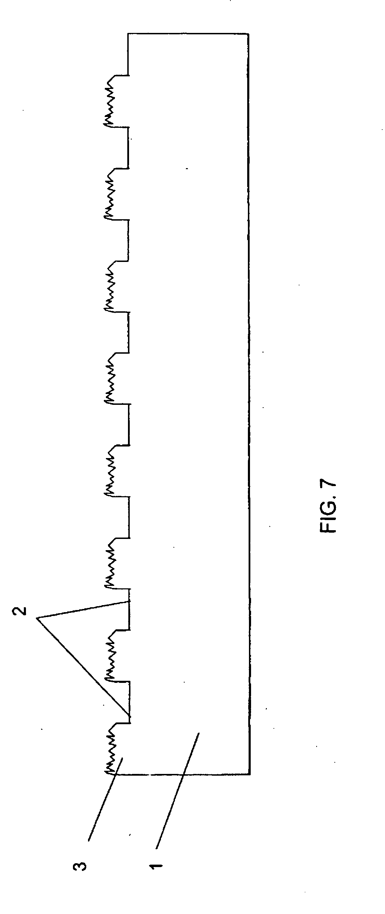

La figure 7 est une vue schématique d'un produit marqué selon l'invention obtenu selon la variante du procédé décrit en figure 1, le rouleau supérieur 12 étant apte à former sur la feuille 1 des motifs géométriques en creux et/ou en relief, par exemple des pyramides ou des lignes. Les motifs peuvent être larges de 5 mm à 1 cm, espacés périodiquement ou non de quelques cm, notamment de 1 à 5 cm, et de profondeur de 0,01 à 2 mm.

Les zones en reliefs présentent des griffures parallèles au sens de défilement du verre, i. e. perpendiculairement à l'axe du cylindre. Le marquage des zones en relief n'enlève que quelques µm de matière.

Le produit illustré comprend des motifs en creux 2 sous forme de lignes parallèles de profondeur de 1 mm, de largeur entre 3 mm et 10 mm espacées de zones en reliefs griffées 3 de largeur entre 6 et 20 mm.

Alternativement, on peut former des motifs en creux de largeur très inférieure à la distance entre motifs de profondeur de 1 mm, par exemple de largeur égale à 2 mm et séparées entre eux d'une distance égale à 30 mm.

## Revendications

1. Procédé de marquage d'une face (1a, 1'a) d'un substrat (1, 1') de type verrier comportent une étape de marquage mécanique de la face (1a, 1'a) du substrat (1, 1') à l'état visqueux de viscosité donnée, par contact mécanique avec une surface (41) en un matériau de marquage, le logarithme décimal de la viscosité du substrat définie en poise étant choisi supérieur à 4 et inférieur ou égal à 11, l'un au moins du substrat et de la surface de marquage étant plan et mobile en translation, la vitesse relative entre la surface en matériau de marquage et la face du substrat étant non nulle, **caracterisé en ce que** le marquage est réalisé avec un moyen de marquage (40, 40') à surface externe courbe (41) en ledit matériau de marquage, et ledit substrat (1, 1') défile à une vitesse donnée, le moyen de marquage (40, 40') étant de vitesse linéaire ou tangentielle supérieure à la vitesse du substrat.

2. Procédé de marquage selon la revendication 1 **caractérisé en ce que**, le logarithme décimal de la viscosité du substrat (1, 1') définie en poise est choisi entre 4, 5 et 8, de préférence entre 5,5 et 6,5.

3. Procédé de marquage selon l'une des revendications précédentes **caractérisé en ce que** le marquage permet d'obtenir des irrégularités fines, définies par un paramètre de rugosité Ra inférieur ou égal à 10 µm, de préférence 5 µm et/ou un paramètre de rugosité Rdq supérieur ou égal à 2°, avec un filtre gaussien de 0,8 mm sur une longueur de balayage d'au moins quelques millimètres, avec un pas de 5 µm, et de préférence conférant au substrat (1, 1') un aspect flou et/ou mat.

4. Procédé de marquage selon l'une des revendications précédentes **caractérisé en ce que** le marquage est réalisé sur la face qui présente déjà des irrégularités, en creux et/ou en relief, notamment des motifs géométriques.

5. Procédé de marquage selon l'une des revendications précédentes **caractérisé en ce que** la surface est abrasive et/ou sablée, et/ou le matériau de marquage est à base de céramique(s) (41) en particulier est une couche de céramique(s) (41), notamment un tissu abrasif microstructuré.

6. Procédé de marquage selon l'une des revendications précédentes **caractérisé en ce que** la surface (41) est une couche à base de céramique(s) avec une dureté supérieure ou égale à 500 Hv.

7. Procédé de marquage selon l'une des revendications précédentes **caractérisé en ce que** la surface (41) est une (multi)couche à base de céramique(s) et la céramique est choisie parmi l'un ou les matériaux suivants : zirconate de magnésium, alumine zircone, carbure de chrome, carbure de tungstène, oxyde de chrome.

8. Procédé de marquage selon l'une des revendications précédentes **caractérisées en ce que** la face (1a, 1'a) est plane ou sensiblement plane.

9. Procédé de marquage selon l'une des revendications précédentes **caractérisé en ce qu'**il comprend une étape de formation d'une feuille correspondant au substrat verrier (1, 1'), suivi, en continu, dudit marquage.

10. Procédé de marquage selon l'une des revendications précédentes **caractérisé en ce que** le marquage est réalisé avant un passage dans une étenderie ou un four de recuisson.

11. Procédé de marquage selon l'une des revendications précédentes **caractérisé en ce qu'**il comprend une étape de formation d'une feuille correspondant audit substrat verrier (1, 1') par laminage qui éventuellement imprime la feuille, suivi, en continu, dudit marquage.

12. Procédé de marquage selon la revendication précédente **caractérisé en ce qu'**il est réalisé après la remontée en température de la face (1a, 1'a) de la feuille (1, 1').

13. Procédé de marquage selon l'une des revendications 1 à 10 **caractérisé en ce qu'**il comprend une étape de formation d'une feuille correspondant audit substrat verrier par étirage vertical ou horizontal suivi, en continu, dudit marquage.

14. Procédé de marquage selon l'une des revendications précédentes **caractérisé en ce que** le marquage est réalisé avec un moyen de marquage rotatif (40, 40') suivant un axe sensiblement parallèle à la face (1a, 1'a) choisie plane et comprend un membre cylindrique, de préférence un rouleau.

15. Procédé de marquage selon l'une des revendications précédentes **caractérisé en ce que** le marquage est réalisé avec un moyen de marquage rotatif (40, 40') suivant un axe sensiblement parallèle à la face choisie plane et positionné au-dessus de ladite face (1a, 1'a), le substrat (1, 1') étant mobile en translation et disposé sur un convoyeur qui est de préférence un système à rouleaux.

16. Procédé de marquage selon la revendication précédente **caractérisé en ce que** le moyen de marquage rotatif présente un mouvement additionnel de va-et-vient de préférence de faible amplitude.

17. Procédé de marquage selon l'une des revendications précédentes **caractérisé en ce que** le marquage est réalisé avec un moyen de marquage rotatif choisi parmi un corps cylindrique creux éventuellement refroidi par un vecteur disposé dans le corps creux, ou un corps plein, ledit corps étant de préférence en matériau de marquage céramique et comprenant éventuellement une partie métallique sous-jacente.

18. Procédé de marquage selon l'une des revendications précédentes **caractérisé en ce qu'**il comprend des marquages successifs par une pluralité de moyens rotatifs en des matériaux de marquage distincts ou identiques et avec des axes d'orientations distinctes ou identiques.

## Patentansprüche

1. Verfahren zur Markierung einer Fläche (1a, 1'a) eines glasartigen Substrats (1, 1'), umfassend einen Schritt des mechanischen Markierens der Fläche (1a, 1'a) des Substrats (1, 1') im viskosen Zustand, bei einer gegebenen Viskosität, durch mechanischen Kontakt mit einer Oberfläche (41) aus Markierungsmaterial, wobei der dekadische Logarithmus der in Poise bestimmten Viskosität des Substrats größer als 4 und kleiner oder gleich 11 gewählt ist, wobei das Substrat und/oder die Markierungsoberfläche plan und translatorisch beweglich ist, wobei die Relativgeschwindigkeit zwischen der Oberfläche aus dem Markierungsmaterial und der Substratfläche ungleich null ist, **dadurch gekennzeichnet, dass** das Markieren mittels einem Markierungsmittel (40, 40') mit einer gewölbten Außenfläche (41) aus dem Markierungsmaterial erfolgt und das Substrat (1, 1') mit einer gegebenen Geschwindigkeit vorbeiläuft, wobei das Markierungsmittel (40, 40') eine Linear- oder Tangentialgeschwindigkeit aufweist, die größer als die Geschwindigkeit des Substrats ist.

2. Markierungsverfahren nach Anspruch 1, **dadurch gekennzeichnet, dass** der dekadische Logarithmus der in Poise bestimmten Viskosität des Substrats (1, 1') zwischen 4,5 und 8, vorzugsweise zwischen 5,5 und 6,5 gewählt ist.

3. Markierungsverfahren nach einem der vorhergehenden Ansprüche, **dadurch gekennzeichnet, dass** das Markieren ermöglicht, feine Unebenheiten zu erhalten, die durch einen Rauigkeitsparameter Ra kleiner oder gleich 10 µm, vorzugsweise 5 µm, und/oder einen Rauigkeitsparameter Rdq größer oder gleich 2°, mit einem Gaußschen Filter von 0,8 mm über eine Abtastlänge von mindestens einigen Millimetern, bei einer Schrittweite von 5 µm, definiert sind und vorzugsweise dem Substrat (1, 1') ein verwaschenes und/oder mattes Aussehen verleihen.

4. Markierungsverfahren nach einem der vorhergehenden Ansprüche, **dadurch gekennzeichnet, dass** das Markieren auf der Fläche erfolgt, die bereits vertiefte und/oder erhabene Unebenheiten, insbesondere geometrische Muster, aufweist.

5. Markierungsverfahren nach einem der vorhergehenden Ansprüche, **dadurch gekennzeichnet, dass** die Oberfläche schleifend und/oder sandgestrahlt ist und/oder das Markierungsmaterial auf Basis von Keramik(en) (41), insbesondere eine Keramikschicht (41), im Besonderen ein mikrostrukturiertes Schleifgewebe, ist.

6. Markierungsverfahren nach einem der vorhergehenden Ansprüche, **dadurch gekennzeichnet, dass** die Oberfläche (41) eine Schicht auf Basis von Keramik(en) mit einer Härte größer oder gleich 500 Hv ist.

7. Markierungsverfahren nach einem der vorhergehenden Ansprüche, **dadurch gekennzeichnet, dass** die Oberfläche (41) eine (Mehrfach-) Schicht auf Basis von Keramik(en) ist und die Keramik aus den folgenden Materialien gewählt ist: Magnesiumzirkonat, Aluminiumoxid/Zirkonoxid, Chromkarbid, Wolframkarbid, Chromoxid.

8. Markierungsverfahren nach einem der vorhergehenden Ansprüche, **dadurch gekennzeichnet, dass** die Fläche (1a, 1'a) plan oder im Wesentlichen plan ist.

9. Markierungsverfahren nach einem der vorhergehenden Ansprüche, **dadurch gekennzeichnet, dass** es einen Schritt der Bildung einer Tafel umfasst, die dem Glassubstrat (1, 1') entspricht, gefolgt, im Durchlauf, von dem Markieren.

10. Markierungsverfahren nach einem der vorhergehenden Ansprüche, **dadurch gekennzeichnet, dass** das Markieren vor einem Durchlauf durch einen Rollenkühlofen oder einen Abstehofen erfolgt.

11. Markierungsverfahren nach einem der vorhergehenden Ansprüche, **dadurch gekennzeichnet, dass** es einen Schritt der Bildung einer Tafel umfasst, die dem Glassubstrat (1, 1') entspricht, durch einen Walzvorgang, der gegebenenfalls die Tafel prägt, gefolgt, im Durchlauf, von dem Markieren.

12. Markierungsverfahren nach dem vorhergehenden Anspruch, **dadurch gekennzeichnet, dass** es nach dem Wiederanstieg der Temperatur der Fläche (1a, 1'a) der Tafel (1, 1') durchgeführt wird.

13. Markierungsverfahren nach einem der Ansprüche 1 bis 10, **dadurch gekennzeichnet, dass** es einen Schritt der Bildung einer Tafel umfasst, die dem Glassubstrat entspricht, durch vertikales oder horizontales Ziehen, gefolgt, im Durchlauf, von dem Markieren.

14. Markierungsverfahren nach einem der vorhergehenden Ansprüche, **dadurch gekennzeichnet, dass** das Markieren mit einem rotierenden Markierungsmittel (40, 40') entlang einer Achse im Wesentlichen parallel zur gewählten planen Fläche (1a, 1'a) erfolgt und ein zylindrisches Element, vorzugsweise eine Walze, umfasst.

15. Markierungsverfahren nach einem der vorhergehenden Ansprüche, **dadurch gekennzeichnet, dass** das Markieren mit einem rotierenden Markierungsmittel (40, 40') entlang einer Achse im Wesentlichen parallel zur gewählten planen Fläche (1a, 1'a) und über der Fläche (1a, 1'a) angeordnet erfolgt, wobei das Substrat (1, 1') translatorisch beweglich ist und auf einem Förderer, vorzugsweise einem Rollenförderer, angeordnet ist.

16. Markierungsverfahren nach dem vorhergehenden Anspruch, **dadurch gekennzeichnet, dass** das rotierende Markierungsmittel eine zusätzliche hin- und hergehende Bewegung mit vorzugsweise kleiner Amplitude ausführt.

17. Markierungsverfahren nach einem der vorhergehenden Ansprüche, **dadurch gekennzeichnet, dass** das Markieren mit einem rotierenden Markierungsmittel erfolgt, das aus einem zylindrischen Hohlkörper, der gegebenenfalls durch ein im Hohlkörper vorgesehenes Trägermittel gekühlt wird, oder einem Vollkörper, wobei der Körper vorzugsweise aus keramischem Markierungsmaterial ist und gegebenenfalls einen darunter liegenden Metallteil umfasst, gewählt ist.

18. Markierungsverfahren nach einem der vorhergehenden Ansprüche, **dadurch gekennzeichnet, dass** es aufeinanderfolgende Markierungsvorgänge durch eine Vielzahl von rotierenden Mitteln aus verschiedenen oder identischen Markierungsmaterialien und mit verschieden oder identisch orientierten Achsen umfasst.

## Claims

1. A method of marking a face (1a, 1'a) of a glass-type substrate (1, 1'), comprising a step of mechanically marking the face (1a, 1'a) of the substrate (1, 1') in a viscous state of given viscosity, by mechanical contact with a surface (41) made of a marking material, the decimal logarithm of the viscosity of the substrate, defined in poise, being chosen greater than 4 and less than or equal to 11, at least one of the substrate and the marking surface being planar and movable in translation, the relative speed between the surface made of the marking material and the face of the substrate being nonzero, **characterized in that** the marking is carried out with a marking means (40, 40') having an outer curved surface (41) made of said marking material, and said substrate (1, 1') runs by at a given speed, the marking means (40, 40') being at a linear or tangential speed greater than the speed of the substrate.

2. The marking method as claimed in claim 1, **characterized in that** the decimal logarithm of the viscosity of the substrate (1, 1'), defined in poise, is chosen between 4.5 and 8, preferably between 5.5 and 6.5.

3. The marking method as claimed in one of the preceding claims, **characterized in that** marking allows fine irregularities to be obtained, defined by a roughness parameter Ra less than or equal to 10 µm, preferably 5 µm, and/or a roughness parameter Rdq greater than or equal to 2°, with a 0.8 mm Gaussian filter at a sweep length of at least a few millimeters, with a pitch of 5 µm, and preferably conferring a hazy and/or matt appearance on the substrate (1, 1').

4. The marking method as claimed in one of the preceding claims, **characterized in that** the marking is carried out on the face which already has irregularities, recessed and/or in relief, in particular geometric patterns.

5. The marking method as claimed in one of the preceding claims, **characterized in that** the surface is abrasive and/or peened, and/or the marking material is ceramic(s)-based (41), and is in particular a ceramic layer (41), especially a microstructured abrasive fabric.

6. The marking method as claimed in one of the preceding claims, **characterized in that** the surface (41) is a ceramic-based layer with a Vickers hardness of greater than or equal to 500.

7. The marking method as claimed in one of the preceding claims, **characterized in that** the surface (41) is a ceramic-based (multi)layer and **in that** the ceramic is chosen to be one or more of the following materials: magnesium zirconate, alumina/zirconia, chromium carbide, tungsten carbide, chromium oxide.

8. The marking method as claimed in one of the preceding claims, **characterized in that** the face (1a, 1'a) is planar or approximately planar.

9. The marking method as claimed in one of the preceding claims, **characterized in that** it comprises a step of formation of a sheet corresponding to the glass substrate (1, 1'), followed without interruption by said marking.

10. The marking method as claimed in one of the preceding claims, **characterized in that** the marking is carried out before passing through a lehr or annealing furnace.

11. The marking method as claimed in one of the preceding claims, **characterized in that** it comprises a step of formation of a sheet corresponding to said glass substrate (1, 1') by rolling, which optionally prints the sheet, followed, without interruption, by said marking.

12. The marking method as claimed in the preceding claim, **characterized in that** it is carried out after raising the temperature of the face (1a, 1'a) of the sheet (1, 1').

13. The marking method as claimed in one of claims 1 to 10, **characterized in that** it comprises a step of formation of a sheet corresponding to said glass substrate by vertical or horizontal drawing followed, without interruption, by said marking.

14. The marking method as claimed in one of the preceding claims, **characterized in that** the marking is carried out with a marking means (40, 40') rotating about an axis approximately parallel to the chosen planar face (1a, 1'a) and which comprises a cylindrical member, preferably a roller.

15. The marking method as claimed in one of the preceding claims, **characterized in that** the marking is carried out with a marking means (40, 40') rotating about an axis approximately parallel to the chosen planar face and positioned above said face (1a, 1'a), the substrate (1, 1') being movable in translation and arranged on a conveyor, which is preferably a roller system.

16. The marking method as claimed in the preceding claim, **characterized in that** the rotating-marking means has an additional back-and-forth movement, preferably of small amplitude.

17. The marking method as claimed in one of the preceding claims, **characterized in that** the marking is carried out with a rotating marking means chosen from a hollow cylindrical body, optionally cooled by a medium placed inside the hollow body, or a solid body, said body preferably being made of a ceramic marking material and perhaps comprising an underlying metal part.

18. The marking method as claimed in one of the preceding claims, **characterized in that** it comprises successive markings by a plurality of rotating means made of distinct or identical marking materials and with distinct or identical orientation axes.
